# FASCICULE DE BREVET EUROPEEN

(11) **EP 2 655 135 B1**
(45) Date de publication et mention de la délivrance du brevet: **08.07.2015**
(21) Numéro de dépôt: 11802502.2
(22) Date de dépôt: 23.11.2011
(51) Int. Cl.: B60R 19/24

(54) **ENSEMBLE DE FIXATION D'UNE PEAU D'UN PARE-CHOC A UNE STRUCTURE D'UNE PARTIE AVANT D'UN VEHICULE AUTOMOBILE.**
BEFESTIGUNGSANORDNUNG FÜR EINE STOSSFÄNGERVERKLEIDUNG ZU EINEM VORDERAUFBAU EINES KRAFTFAHRZEUGES
FASTENING ASSEMBLY FOR A BUMPER FASCIA TO A FRONT STRUCTURE OF A MOTOR VEHICLE

(30) Priorité: 20.12.2010 FR 1060776
(43) Date de publication de la demande: 30.10.2013
(73) Titulaire: Peugeot Citroën Automobiles SA, 78140 Vélizy Villacoublay (FR)
(72) Inventeur: PERON, Rodolphe, F-95220 Herblay (FR); MOREAU, Cyril, F-91160 Champlan (FR)
(74) Mandataire: Ménès, Catherine
(86) Numéro de dépôt international: PCT/FR2011/052741
(87) Numéro de publication internationale: WO 2012/085371

(56) Documents cités:
- FR-A1- 2 892 078

## Description

L'invention se rapporte à un ensemble de fixation d'une peau d'un pare-choc à une structure d'une partie avant d'un véhicule automobile.

L'invention se rapporte également à une partie avant d'un véhicule automobile fixée à une peau d'un pare-choc par un tel ensemble ainsi qu'à un procédé d'assemblage utilisant un tel ensemble.

Les véhicules automobiles comportent typiquement une partie avant comprenant un pare-choc rapporté sur une structure d'une partie avant.

Dans le but de donner un effet rentrant, certains pare-chocs sont découpés dans la zone destinée à recevoir le projecteur et la calandre qui correspond à une garniture composée d'une grille sur l'avant du véhicule automobile protégeant le radiateur et dissimulant l'orifice d'entrée d'air de refroidissement.

Ces surfaces rentrantes sont flexibles de sorte que leur maintien en position sur le véhicule automobile nécessite une fixation qui est difficile à réaliser.

Il est connu des peaux de pare-choc clippées sur la structure de la partie avant d'un véhicule automobile.

Il est également connu un pare-choc comprenant des ouvertures destinées à recevoir des crochets et un clip appartenant tous à un renfort de pare-choc.

Il est également connu un ensemble de fixation entre une aile, un boitier de projecteur et la peau d'un pare-choc. L'ensemble comporte notamment un rainure appartenant à la structure de la partie avant et formant une lame souple venant en appui contre le boitier du projecteur.

Cependant, aucun des ensembles de fixation connus ne permet de manière satisfaisante de maintenir la peau d'un pare-choc sur la structure de la partie avant, en particulier la partie de la peau destinée à être placée entre l'emplacement de la calandre et celui du projecteur.

En outre, il existe un besoin de positionner et d'assembler la peau sur la structure même en présence de déformations de la structure ou de la peau, résultant par exemple de différences de température et/ou de chocs reçus.

Le document FR 2 892 078 A est considéré comme étant le plus proche de l'art antérieur et divulgue un ensemble de fixation d'une peau d'un pare-choc à une structure d'une partie avant d'un véhicule automobile, ledit ensemble comportant
- un moyen de guidage, un moyen de retenue suivant une première direction (Z) et un moyen de réception d'un crochet autorisant un déplacement dudit crochet suivant la première direction (Z) et une deuxième direction (Y) sensiblement perpendiculaire à la première direction (Z), ledit moyen de retenue appartenant à la peau du pare-choc, et
- un deuxième moyen de guidage apte à guider le moyen de guidage suivant la deuxième direction (Y), ledit moyen de guidage étant déformable suivant la deuxième direction (Y), un crochet apte à venir dans le moyen de réception, ledit crochet étant configuré pour exercer une contrainte sur la peau selon une troisième direction (X) sensiblement perpendiculaire à la première et à la deuxième directions (Z, Y), et une ouverture apte à recevoir le moyen de retenue suivant la deuxième direction (Y), ledit crochet appartenant à la structure.

Un but de la présente invention est donc de fournir un ensemble de fixation qui réponde à ce besoin sans les inconvénients précités.

A cet effet, selon un premier aspect, la présente invention a pour objet un ensemble de fixation d'une peau d'un pare-choc à une structure d'une partie avant d'un véhicule automobile, ledit ensemble comportant
- un pion de guidage, un moyen de retenue suivant une première direction et un moyen de réception d'un crochet autorisant un déplacement dudit crochet suivant la première direction et une deuxième direction sensiblement perpendiculaire à la première directions, ledit pion de guidage, ledit moyen de retenue et ledit moyen de réception appartenant à la peau du pare-choc ; et
- un moyen de guidage apte à guider le pion de guidage suivant la première direction et la deuxième directions, ledit moyen de guidage étant déformable suivant la deuxième directions, un crochet apte à venir dans le moyen de réception, ledit crochet étant configuré pour exercer une contrainte sur la peau selon une troisième direction sensiblement perpendiculaire à la première et à la deuxième directions, et une ouverture apte à recevoir le moyen de retenue suivant la deuxième directions, ledit moyen de guidage, ledit crochet et ladite ouverture appartenant à la structure.

L'ensemble de la présente invention comprend donc des moyens de fixation et de positionnement montés sur la peau et sur la structure permettant un maintien optimum de la peau du pare-choc sur la structure de la partie avant.

En outre, l'ensemble de l'invention autorise, lors de la fixation de la peau sur la structure, un jeu selon la première et la deuxième directions ce qui permet d'installer la peau sur la structure même en présence de déformations de ces dernières.

Selon d'autres caractéristiques de l'invention, l'ensemble de l'invention comporte l'une ou plusieurs des caractéristiques optionnelles suivantes considérées seules ou selon toutes les combinaisons possibles :
- le moyen de guidage est un pied présentant une surface d'appui configurée pour recevoir le pion de guidage ce qui permet un positionnement simple et efficace ;
- le moyen de guidage comporte une surface d'appui destinée à recevoir le pion présentant une partie chanfreinée ce qui permet lors de l'installation de la peau sur la structure d'éviter d'endommager la surface d'appui ;
- le moyen de guidage est à proximité d'une ouverture longitudinale d'axe sensiblement colinéaire à la première direction ce qui permet de conférer une flexibilité latérale suivant la deuxième direction au moyen de guidage ;
- le crochet présente un profil incurvé suivant la troisième direction ce qui permet d'assurer un maintien de la structure de la partie avant suivant la troisième direction ;
- le moyen de retenue est une excroissance destinée à venir dans l'ouverture ce qui permet de bloquer la peau sur la structure dans la position d'assemblage.

Selon un autre aspect, l'invention a pour objet une partie avant d'un véhicule automobile dont la structure est fixée à une peau d'un pare-choc par un ensemble de fixation selon l'invention.

Selon encore un autre aspect, l'invention a pour objet un procédé d'assemblage d'une peau d'un pare-choc et d'une structure d'une partie avant d'un véhicule automobile utilisant l'ensemble de fixation de l'invention :
- une étape A où l'on met le pion de guidage en contact avec une surface d'appui du moyen de guidage;
- une étape B où l'on fait glisser ledit pion de guidage en contact et le long de ladite surface d'appui selon la première et la deuxième directions ;
- une étape C où l'on insère le crochet dans le moyen de réception ;
- une étape D où l'on met en contact le crochet et le moyen de réception de sorte à exercer une contrainte entre la structure et la peau suivant la troisième direction ;
- une étape E où l'on insère le moyen de retenue dans l'ouverture jusqu'à ce que le moyen de retenue bloque le mouvement de la peau par rapport à la structure suivant la première direction.

Préférentiellement, au cours de l'étape A, le pion de guidage est disposé contre une partie chanfreinée de la surface d'appui.

Préférentiellement, les étapes B, C et E sont réalisées de manière sensiblement simultanée.

L'invention sera davantage comprise à la lecture de la description non limitative qui va suivre, faite en référence aux figures ci-annexées.
- la figure 1 est une vue en perspective de devant d'un mode de réalisation de l'ensemble de l'invention ;
- la figure 2 est une vue en perspective de derrière du mode de réalisation de la figure 1 ;
- la figure 3 est une vue en perspective de l'agrandissement de la zone III de la figure 2 ;
- la figure 4 est une vue en perspective de derrière du support comportant la surface d'appui de la structure de la partie avant de la figure 1 ;
- la figure 5 est une vue en perspective de derrière du crochet de la structure de la partie avant de la figure 1 ;
- la figure 6 est une vue en perspective de derrière de l'ouverture de la structure de la partie avant de la figure 1 ;
- la figure 7 est une vue en perspective de derrière d'un mode de réalisation de la peau d'un pare-choc selon la figure 1 ;
- la figure 8 est une vue en perspective de derrière de l'agrandissement de la zone VIII de la figure 7 comprenant un moyen de guidage ;
- la figure 9 est une vue en perspective de côté de l'agrandissement de la zone IX de la figure 7 comprenant un moyen de retenue ;
- les figures 10 à 12 sont des vues en perspective de derrière d'un mode de réalisation du procédé d'assemblage des étapes A à D du mode de réalisation de la partie avant selon la figure 1 ;
- la figure 13 est une vue en perspective de dessus de l'étape D ;
- la figure 14 est une vue en perspective de derrière d'un mode de réalisation de l'étape E du procédé selon les figures 10 à 12 ;
- la figure 15 est un agrandissement de la zone XV de la figure 14.

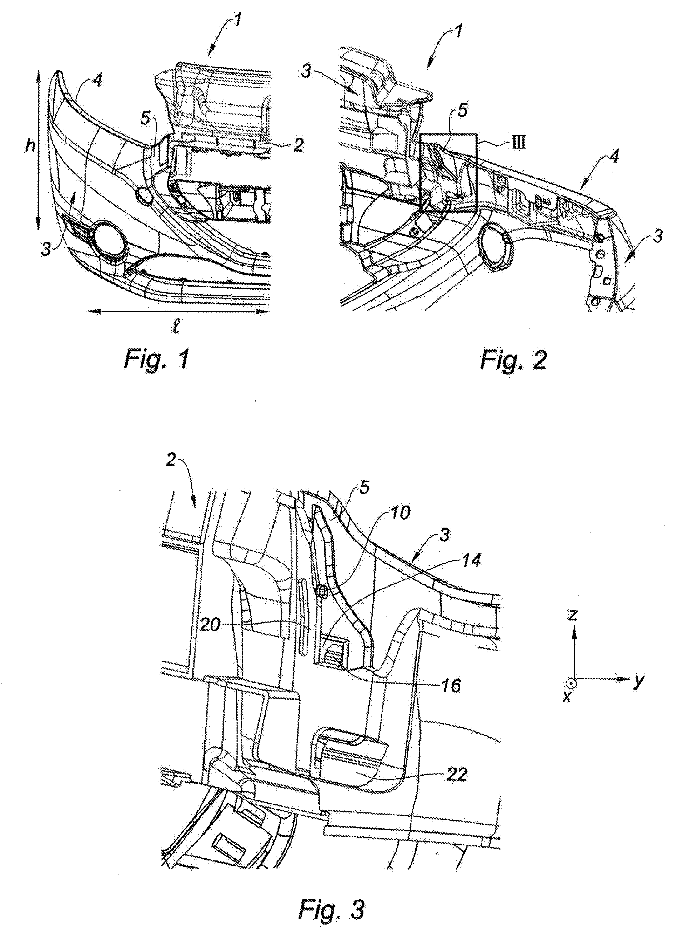

Comme représenté sur la figure 1, la partie avant 1 d'un véhicule automobile comporte une structure 2 sur laquelle est fixé un pare-choc 3. Le pare-choc 3 est profilé de sorte à suivre la forme de la partie avant 1.

La structure 2 de la partie avant comprend la carrosserie de cette dernière et est configurée pour recevoir la fixation du pare-choc 3.

Le pare-choc 3 présente une petite dimension h correspondant à la hauteur dudit pare-choc 3 et une plus grande dimension I correspondant à la longueur dudit pare-choc. Ladite longueur I est légèrement supérieure à la longueur de la partie avant 1.

La hauteur h et la longueur I sont visibles lorsque le pare-choc 3 est fixé sur la partie avant 1.

On définit ici une première direction comme étant sensiblement colinéaire à la hauteur h du pare-choc. Ladite première direction est désignée par « Z ».

On définit ici une deuxième direction comme étant sensiblement colinéaire à la longueur I du pare-choc. Ladite deuxième direction est désignée par « Y ».

On définit ici une troisième direction comme étant sensiblement perpendiculaire aux première et deuxième directions Z et Y. Ladite troisième direction est désignée par « X ».

Le pare-choc 3 est typiquement revêtu d'une peau réalisée notamment en matériau thermoplastique.

Dans le mode de réalisation représenté à la figure 2, la peau recouvrant le pare-choc 3 est découpée sur le côté supérieur 4, au niveau de la zone délimitant l'emplacement d'un calandre et d'un projecteur, afin de donner un effet rentrant. En d'autres termes, la peau présente en cette partie 5 un angle non nul suivant la deuxième direction Y. Cette partie 5 montre une grande flexibilité suivant la première direction Z.

Ladite partie 5 est fixée sur la structure 2 par l'ensemble de fixation de l'invention. Nous désignerons par la suite par la référence 5 la peau correspondant à ladite partie de peau.

Comme représenté sur la figure 3, l'ensemble de fixation de l'invention comporte un pion de guidage 10, un moyen de retenue (non représenté) suivant la première direction Z et un moyen de réception 14 d'un crochet 16 autorisant un déplacement dudit crochet 16 suivant la première direction Z et la deuxième direction Y. Ledit pion de guidage 10, ledit moyen de retenue et ledit moyen de réception 14 appartenant à la peau 5 du pare-choc.

L'ensemble de fixation comporte également un moyen de guidage 20 apte à guider le pion de guidage 10 suivant la première direction Z et la deuxième direction Y, ledit moyen de guidage 20 étant déformable suivant la deuxième direction Y, un crochet 16 apte à venir dans le moyen de réception, ledit crochet 16 étant configuré pour exercer une contrainte sur la peau 5 selon la troisième direction X et une ouverture 22 apte à recevoir le moyen de retenue suivant la deuxième direction Y. Ledit moyen de guidage 20, ledit crochet 16 et ladite ouverture 22 appartenant à la structure 2.

Ainsi, l'ensemble de la présente invention comprend donc une pluralité de moyens de fixation montés sur la peau 5 ou sur la structure 2 coopérant entre eux et permettant un maintien optimum de la peau 5 du pare-choc sur la structure 2 de la partie avant. En outre, les moyens de fixation sont configurés pour tolérer un jeu lors de l'assemblage de la peau 5 et de la structure 2, le jeu étant dû par exemple à une différence de température ou à un ou plusieurs chocs subis par la partie avant 1.

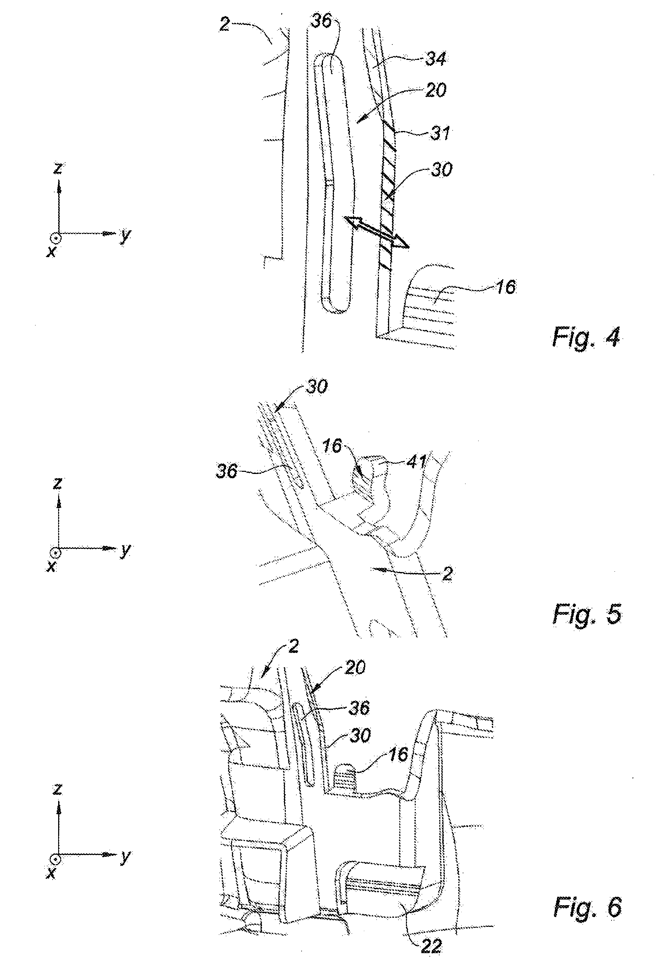

Selon le mode de réalisation représenté à la figure 4, le moyen de guidage 20 est un pied présentant une surface d'appui 30 configurée pour recevoir le pion de guidage 10 ce qui permet un positionnement simple et efficace. Le pied peut présenter une largeur d'au moins 3 mm environ.

Le moyen de guidage 20, en particulier le pied, peut présenter une surface d'appui 30 présentant une rupture de pente 31 ce qui permet au pion de guidage 10 d'évoluer de manière différente suivant la première direction Z et la deuxième direction Y en fonction de ce que l'utilisateur a préalablement déterminé.

Le moyen de guidage 20, notamment le pied comme représenté à la figure 4, peut présenter une surface d'appui 30 destinée à recevoir le pion 10 présentant une partie chanfreinée 34 ce qui permet lors de l'installation de la peau 5 sur la structure 2 d'éviter d'endommager ladite surface d'appui 32.

De manière avantageuse, le moyen de guidage 20 peut être à proximité d'une ouverture longitudinale 36 d'axe sensiblement colinéaire à la première direction Z ce qui permet de conférer au moyen de guidage 20 une flexibilité latérale suivant la deuxième direction Y.

Selon le mode de réalisation de la figure 5, le crochet 16 peut présenter un profil incurvé suivant la troisième direction X ce qui permet d'assurer un maintien de la structure 2 de la partie avant suivant la troisième direction X. Ainsi, la peau 5 est maintenue sur la structure 2 dans la direction de roulement du véhicule automobile.

Le crochet 16 peut présenter un sommet 41 sensiblement arrondi afin de faciliter son insertion dans le moyen de réception 14 et d'éviter une dégradation.

Comme représenté sur la figure 6, l'ouverture 22 destinée à recevoir le moyen de retenue est suffisamment large selon la deuxième direction Y et haute selon la première direction Z pour autoriser un débattement latéral du moyen de retenue lors de l'assemblage. L'ouverture 22 est disposée sensiblement au-dessous du crochet 16 selon la première direction Z et décalée par rapport audit crochet 16 selon la deuxième direction Y. L'ouverture a une hauteur suivant la première dimension Z notamment d'au moins 15 mm et une largeur suivant la deuxième dimension Y notamment d'au moins 20 mm.

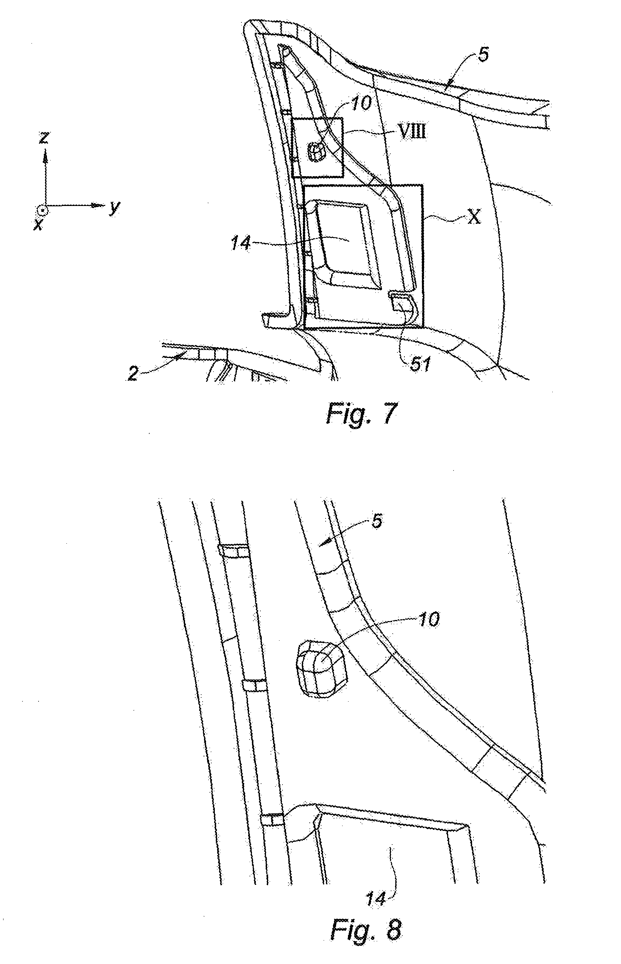

Comme représenté sur la figure 7, les moyens de fixation correspondant au pion de guidage 10, au moyen de réception 14 et au moyen de retenue peuvent être disposés dans cet ordre selon la première direction Z. Lesdits moyens de fixation peuvent être décalés selon la deuxième direction Y.

Comme représenté à la figure 8, le pion de guidage 10 est un élément en relief configuré pour venir glisser en contact et le long de la surface d'appui 30 du moyen de guidage. Pour ce faire, la surface du pion 10 peut être sensiblement arrondie afin de conférer une robustesse audit pion 10.

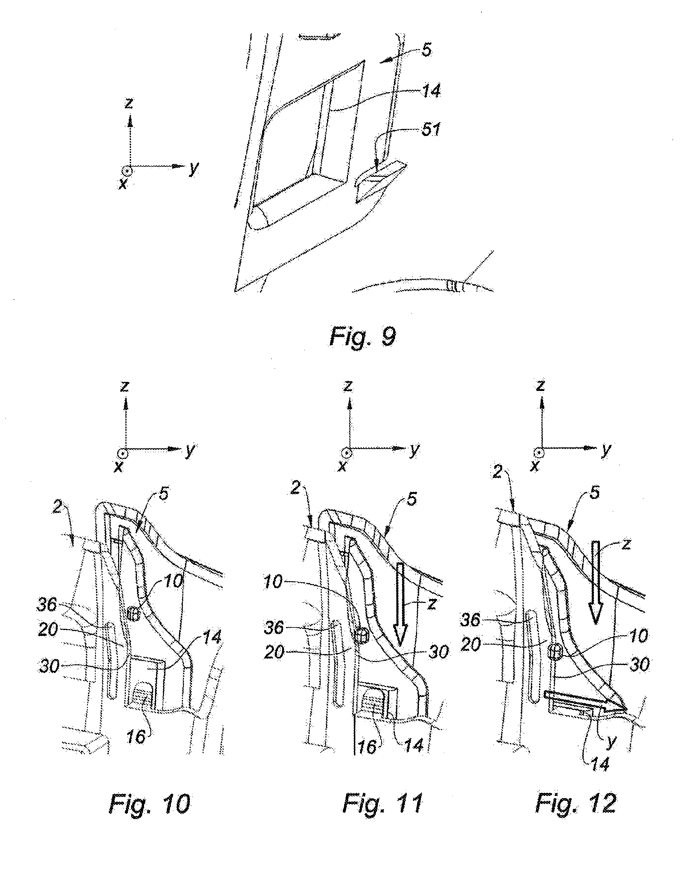

Comme représenté sur la figure 9, le moyen de réception 14 peut être une ouverture de réception de largeur suivant la deuxième direction Y et de hauteur suivant la première direction Z suffisamment importante pour permettre au crochet 16 de venir s'insérer sans être endommagé. A cet effet, l'ouverture de réception peut présenter des bords sensiblement arrondis.

Ladite ouverture de réception a une hauteur suivant la première dimension Z notamment d'au moins 15 mm et une largeur suivant la deuxième dimension Y notamment d'au moins 10 mm.

Dans le cas où le moyen de réception 14 est une ouverture de réception, le crochet 16 est disposé en retrait par rapport aux autres moyens de fixation montés sur la structure 2. La distance de retrait est sensiblement égale à la largeur suivant la troisième direction X de l'ouverture de réception.

Comme représenté à la figure 9, le moyen de retenue peut être une excroissance 51 destinée à venir dans l'ouverture 22 ce qui permet de verrouiller la peau 5 sur la structure 2 dans la position d'assemblage.

La peau 5 du pare-choc et la structure 2 sont assemblées suivant un procédé d'assemblage utilisant l'ensemble de fixation de l'invention, comme représenté aux figures 10 à 15.

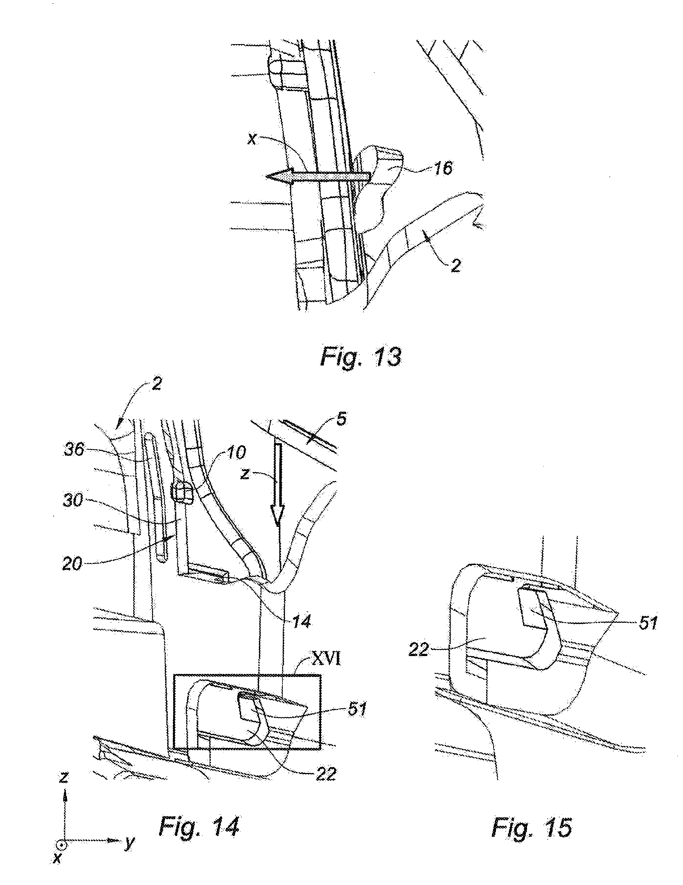

Pour ce faire, ledit procédé comporte :
- une étape A où l'on met le pion de guidage 10 en contact avec la surface d'appui 30 du moyen de guidage (voir la figure 10);
- une étape B où l'on fait glisser ledit pion de guidage 10 en contact et le long de ladite surface d'appui 30 selon la première Z et la deuxième Y directions (voir les figures 11 et 12) ;
- une étape C où l'on insère le crochet 16 dans le moyen de réception 14 (voir les figures 10 à 12);
- une étape D où l'on met en contact le crochet 16 et le moyen de réception 14 de sorte à exercer une contrainte entre la structure 2 et la peau 5 suivant la troisième direction X (voir les figures 13 et 14);
- une étape E où l'on insère le moyen de retenue 51 dans l'ouverture 22 jusqu'à ce que le moyen de retenue 51 bloque le mouvement de la peau 2 par rapport à la structure 5 suivant la première direction Z (voir les figures 14 et 15).

Ainsi, l'ensemble de fixation de l'invention permet de positionner la peau 5 par rapport à la structure 2 suivant la première direction Z et la deuxième direction Y et de maintenir ces dernières suivant la première direction Z et la troisième direction X.

Dans l'étape B, la surface d'appui 30 du moyen de guidage peut présenter des ruptures de tangente ou de pente autorisant le pion de guidage 10 à avoir une trajectoire qui évolue au fur et à mesure de l'assemblage.

Préférentiellement, au cours de l'étape A, le pion de guidage 10 peut être disposé contre une partie chanfreinée 34 de la surface d'appui ce qui permet de ne pas endommager le moyen de guidage 20.

Préférentiellement, les étapes B, C et E peuvent être réalisées de manière sensiblement simultanée. Ainsi, comme représenté dans les figures 10 à 12, le crochet 16 est inséré dans le moyen de réception 14 en même temps que le pion de guidage 10 glisse le long de la surface de guidage 32.

Bien entendu, les caractéristiques décrites dans le cadre des modes de réalisation décrits ci-dessus peuvent être prises isolément ou combinées entre elles sans sortir de la portée de la présente invention.

## Revendications

1. Ensemble de fixation d'une peau (5) d'un pare-choc (3) à une structure (2) d'une partie avant (1) d'un véhicule automobile, ledit ensemble comportant
- un pion de guidage (10), un moyen de retenue (51) suivant une première direction (Z) et un moyen de réception (14) d'un crochet (16) autorisant un déplacement dudit crochet (16) suivant la première direction (Z) et une deuxième direction (Y) sensiblement perpendiculaire à la première direction (Z), ledit pion de guidage (10), ledit moyen de retenue (51) et ledit moyen de réception (14) appartenant à la peau (5) du pare-choc (3) ; et
- un moyen de guidage (20) apte à guider le pion de guidage (10) suivant la première direction (Z) et la deuxième direction (Y), ledit moyen de guidage (20) étant déformable suivant la deuxième direction (Y), un crochet (16) apte à venir dans le moyen de réception (14), ledit crochet (16) étant configuré pour exercer une contrainte sur la peau (5) selon une troisième direction (X) sensiblement perpendiculaire à la première et à la deuxième directions (Z, Y), et une ouverture (22) apte à recevoir le moyen de retenue (51) suivant la deuxième direction (Y), ledit moyen de guidage (20), ledit crochet (16) et ladite ouverture (22) appartenant à la structure (2).

2. Ensemble selon la revendication précédente, dans lequel le moyen de guidage (20) est un pied présentant une surface d'appui (30) configurée pour recevoir le pion de guidage (10).

3. Ensemble selon l'une quelconque des revendications précédentes, dans lequel le moyen de guidage (20) comporte une surface d'appui (30) destinée à recevoir le pion (10) présentant une partie chanfreinée (34).

4. Ensemble selon l'une quelconque des revendications précédentes, dans lequel le moyen de guidage (20) est à proximité d'une ouverture longitudinale (36) d'axe sensiblement colinéaire à la première direction (Z).

5. Ensemble selon l'une quelconque des revendications précédentes, dans lequel le crochet (16) présente un profil incurvé dans suivant la troisième direction (X).

6. Ensemble selon l'une quelconque des revendications précédentes, dans lequel le moyen de retenue est une excroissance (51) destinée à venir dans l'ouverture (22).

7. Partie avant (1) d'un véhicule automobile dont la structure (2) est fixée à une peau (5) d'un pare-choc (3) par un ensemble de fixation selon l'une quelconque des revendications précédentes.

8. Procédé d'assemblage d'une peau (5) d'un pare-choc (3) et d'une structure (2) d'une partie avant (1) d'un véhicule automobile utilisant l'ensemble de fixation selon l'une quelconque des revendications 1 à 6 :
- une étape A où l'on met le pion de guidage (10) en contact avec une surface d'appui (30) du moyen de guidage (20);
- une étape B où l'on fait glisser ledit pion de guidage (10) en contact et le long de ladite surface d'appui (30) selon la première et la deuxième directions (Z, Y) ;
- une étape C où l'on insère le crochet (16) dans le moyen de réception (14) ;
- une étape D où l'on met en contact le crochet (16) et le moyen de réception (14) de sorte à exercer une contrainte entre la structure (2) et la peau (5) suivant la troisième direction (X) ;
- une étape E où l'on insère le moyen de retenue (51) dans l'ouverture (22) jusqu'à ce que le moyen de retenue (51) bloque le mouvement de la peau (5) par rapport à la structure (2) suivant la première direction (Z).

9. Procédé selon la revendication précédente, dans lequel, au cours de l'étape A, le pion de guidage (10) est disposé contre une partie chanfreinée (34) de la surface d'appui (30).

10. Procédé selon les revendications 8 ou 9, dans lequel les étapes B, C et E sont réalisées de manière sensiblement simultanée.

## Patentansprüche

1. Einheit zur Befestigung einer Auskleidung (5) eines Stoßfängers (3) an einer Struktur (2) eines Vorderteils (1) eines Kraftfahrzeugs, wobei die Einheit Folgendes umfasst
- einen Führungsstift (10), ein Rückhaltemittel (51) entlang einer ersten Richtung (Z) und ein Aufnahmemittel (14) eines Hakens (16), das eine Bewegung des Hakens (16) entlang der ersten Richtung (Z) und einer zweiten Richtung (Y) im Wesentlichen senkrecht zu der ersten Richtung (Z) gestattet, wobei der Führungsstift (10), das Rückhaltemittel (51) und das Aufnahmemittel (14) zu der Auskleidung (5) des Stoßfängers (3) gehören, und
- ein Führungsmittel (20), das geeignet ist, um den Führungsstift (10) entlang der ersten Richtung (Z) und der zweiten Richtung (Y) zu führen, wobei das Führungsmittel (20) entlang der zweiten Richtung (Y) verformbar ist, einen Haken (16), der geeignet ist, um in das Aufnahmemittel (14) zu kommen, wobei der Haken (16) ausgelegt ist, um eine Belastung auf die Auskleidung (5) gemäß einer dritten Richtung (X) im Wesentlichen senkrecht zu der ersten und der zweiten Richtung (Z, Y) auszuüben, und eine Öffnung (22), die geeignet ist, um das Rückhaltemittel (51) entlang der zweiten Richtung (Y) aufzunehmen, wobei das Führungsmittel (20), der Haken (16) und die Öffnung (22) zu der Struktur (2) gehören.

2. Einheit nach dem vorhergehenden Anspruch, bei der das Führungsmittel (20) ein Fuß ist, der eine Auflageoberfläche (30) aufweist, die ausgelegt ist, um den Führungsstift (10) aufzunehmen.

3. Einheit nach einem der vorhergehenden Ansprüche, bei der das Führungsmittel (20) eine Auflageoberfläche (30) umfasst, die dazu bestimmt ist, den Stift (10), der einen abgefasten Teil (34) aufweist, aufzunehmen.

4. Einheit nach einem der vorhergehenden Ansprüche, bei der das Führungsmittel (20) in der Nähe einer Längsöffnung (36) einer Achse im Wesentlichen kolinear zu der ersten Richtung (Z) ist.

5. Einheit nach einem der vorhergehenden Ansprüche, bei der der Haken (16) ein entlang der dritten Richtung (X) gebogenes Profil aufweist.

6. Einheit nach einem der vorhergehenden Ansprüche, bei der das Rückhaltemittel eine Ausstülpung (51) ist, die dazu bestimmt ist, in die Öffnung (22) zu kommen.

7. Vorderteil (1) eines Kraftfahrzeugs, dessen Struktur (2) an einer Auskleidung (5) eines Stoßfängers (3) durch eine Befestigungseinheit nach einem der vorhergehenden Ansprüche befestigt ist.

8. Zusammenfügeverfahren einer Auskleidung (5) eines Stoßfängers (3) und einer Struktur (2) eines Vorderteils (1) eines Kraftfahrzeugs, das die Befestigungseinheit nach einem der Ansprüche 1 bis 6 verwendet:
- ein Schritt A, bei dem der Führungsstift (10) in Berührung mit einer Auflageoberfläche (30) des Führungsmittels (20) gebracht wird,
- ein Schritt B, bei dem der Führungsstift (10) in Berührung und entlang der Auflageoberfläche (30) entlang der ersten und zweiten Richtung (Z, Y) gleitet,
- ein Schritt C, bei dem der Haken (16) in das Aufnahmemittel (14) eingefügt wird,
- ein Schritt D, bei dem der Haken (16) und das Aufnahmemittel (14) derart in Berührung gebracht werden, dass eine Belastung zwischen der Struktur (2) und der Auskleidung (5) entlang der dritten Richtung (X) ausgeübt wird,
- ein Schritt E, bei dem das Rückhaltemittel (51) in die Öffnung (22) eingefügt wird, bis das Rückhaltemittel (51) die Bewegung der Auskleidung (5) in Bezug auf die Struktur (2) entlang der ersten Richtung (Z) blockiert.

9. Verfahren nach dem vorhergehenden Anspruch, bei dem der Führungsstift (10) im Laufe des Schritts A gegen einen abgefasten Teil (34) der Auflageoberfläche (30) angeordnet wird.

10. Verfahren nach den Ansprüchen 8 oder 9, bei dem die Schritte B, C und E im Wesentlichen gleichzeitig ausgeführt werden.

## Claims

1. An assembly for fixing a skin (5) of a bumper (3) to a structure (2) of a front part (1) of a motor vehicle, said assembly having
- a guide pin (10), a retaining means (51) in a first direction (Z) and a means (14) for receiving a catch (16), enabling said catch (16) to move in the first direction (Z) and a second direction (Y) approximately perpendicular to the first direction (Z), said guide pin (10), said retaining means (51) and said receiving means (14) belonging to the skin (5) of the bumper (3); and
- a guide means (20) able to guide the guide pin (10) in the first direction (Z) and the second direction (Y), said guide means (20) being deformable in the second direction (Y), a catch (16) able to enter the receiving means (14), said catch (16) being designed to exert a stress on the skin (5) in a third direction (X) approximately perpendicular to the first and second directions (Z, Y), and an opening (22) able to receive the retaining means (51) in the second direction (Y), said guide means (20), said catch (16) and said opening (22) belonging to the structure (2).

2. The assembly according to the preceding claim, in which the guide means (20) is a post having a support surface (30) designed to receive the guide pin (10).

3. The assembly according to any one of the preceding claims, in which the guide means (20) comprises a support surface (30) intended to receive the pin (10) having a chamfered portion (34).

4. The assembly according to any one of the preceding claims, in which the guide means (20) is close to a longitudinal opening (36) having an axis approximately collinear to the first direction (Z).

5. The assembly according to any one of the preceding claims, in which the catch (16) has a curved profile in the third direction (X).

6. The assembly according to any one of the preceding claims, in which the retaining means is an excrescence (51) intended to enter the opening (22).

7. A front part (1) of a motor vehicle, the structure (2) of which is fixed to a skin (5) of a bumper (3) by a fixing assembly according to any one of the preceding claims.

8. An assembly method of a skin (5) of a bumper (3) and a structure (2) of a front part (1) of a motor vehicle using the fixing assembly according to any one of Claims 1 to 6:
- a step A in which the guide pin (10) is placed in contact with a support surface (30) of the guide means (20);
- a step B in which said guide pin (10) is slid in contact with and along said support surface (30) in the first and the second directions (Z, Y);
- a step C in which the catch (16) is inserted in the receiving means (14);
- a step D in which the hook (16) and the receiving means (14) are placed in contact so as to exert a stress between the structure (2) and the skin (5) in the third direction (X);
- a step E in which the retaining means (51) is inserted in the opening (22) until the retaining means (51) blocks the movement of the skin (5) with respect to the structure (2) in the first direction (Z).

9. The method according to the preceding claim, in which, during step A, the guide pin (10) is disposed against a chamfered portion (34) of the support surface (30).

10. The method according to Claims 8 or 9, in which the steps B, C and E are realized approximately simultaneously.
